# EUROPÄISCHE PATENTSCHRIFT

(11) **EP 1 994 216 B1**
(45) Veröffentlichungstag und Bekanntmachung des Hinweises auf die Patenterteilung: **06.11.2013**
(21) Anmeldenummer: 07711722.4
(22) Anmeldetag: 01.03.2007
(51) Int. Cl.: D06F 39/00, G06F 3/045

(54) **BEDIENBLENDENANORDNUNG FÜR HAUSHALTSMASCHINEN UND VERFAHREN ZUR HERSTELLUNG EINER BEDIENBLENDENANORDNUNG**
OPERATING PANEL ARRANGEMENT FOR DOMESTIC APPLIANCES AND METHOD FOR MANUFACTURING AN OPERATING PANEL ARRANGEMENT
AGENCEMENT DE BANDEAU DE COMMANDE POUR DES APPAREILS MÉNAGERS ET PROCÉDÉ DE FABRICATION D'UN AGENCEMENT DE BANDEAU DE COMMANDE

(30) Priorität: 16.03.2006 DE 102006013937
(43) Veröffentlichungstag der Anmeldung: 26.11.2008
(73) Patentinhaber: PAS Deutschland GmbH, 16816 Neuruppin (DE)
(72) Erfinder: EHRLICH, Ralf, 13509 Berlin (DE); SEIKEL, Michael, 10829 Berlin (DE); MEYER, Roland, 16321 Bernau/OT Boernicke (DE); BETNEROWICZ, Marek, 13503 Berlin (DE); GEIGER, Peter, 72800 Eningen u.A. (DE); HEGEWALD, Ronald, 93164 Laaber (DE)
(74) Vertreter: Steil, Christian
(86) Internationale Anmeldenummer: PCT/EP2007/001745
(87) Internationale Veröffentlichungsnummer: WO 2007/104433

(56) Entgegenhaltungen:
- EP-A1- 0 029 770
- GB-A- 2 205 164
- GB-A- 2 262 820
- US-A- 5 694 793
- US-A1- 2003 025 733

## Beschreibung

Die vorliegende Erfindung betrifft eine Bedienblendenanordnung, insbesondere für Haushaltsmaschinen wie Waschmaschinen und Wäschetrockner, mit einer Bedienblende, an deren Außenseite Betätigungsabschnitte und Anzeigeabschnitte zur Bedienung bzw. Kontrolle ausgebildet sind, und mit einer elektrischen Schaltungsanordnung, die mit den Betätigungsabschnitten und den Anzeigeabschnitten gekoppelt und im Bereich der Innenseite der Bedienblende angeordnet ist.

Die vorliegende Erfindung betrifft ferner ein Verfahren zum Herstellen einer solchen Bedienblendenanordnung.

Die Bedienblenden (Blendenkörper) für Haushaltsmaschinen werden heutzutage in der Regel aus Kunststoff im Spritzgießverfahren hergestellt. Die Bedienblenden haben, häufig aus ästhetischen Gründen, eine gewölbte Form. Die Betätigungsabschnitte sind heutzutage entweder als Drehregler oder als Tasten ausgeführt. In der Regel sind diese Schaltelemente mechanisch betätigt. Es sind jedoch auch berührungssensitive Schaltelemente bekannt.

Die Anzeigeabschnitte werden heutzutage durch Leuchtdioden (LEDs), ggf. mit individuell geformten Lichtleitern, oder LCD-Displays (Monitore) verwendet.

Bei der Verwendung von Leuchtdioden werden Lichtleiter häufig in die Blende eingesetzt und verschweißt oder geklebt. Die Bedienblende erhält hierzu Öffnungen. Bei der Verwendung von Displays wird ein angepasstes Kunststofffenster in die Blende montiert (Verschweißen oder Kleben), hinter dem das Display (z.B. LCD) positioniert wird. Die Anzeige- und Betätigungsabschnitte, befinden sich meist auf einem elektronischen Schaltungsträger (einer Leiterplatte).

Da Wasser von außen nicht durch die in der Blende befindlichen Öffnungen auf die Leiterplatte gelangen darf, ist ein hoher Aufwand bei der Fertigung und bei Prüfung notwendig.

Die Bedienblenden werden vor der Montage bedruckt, um Betätigungsabschnitte und Anzeigeabschnitte kenntlich zu machen. Dies erfolgt häufig im Tampon- oder Siebdruck.

Eines der Grundprobleme bei der Fertigung von Haushaltsmaschinen besteht darin, dass diese in einer großen Anzahl unterschiedlicher Varianten herzustellen sind. Zum einen wird ein bestimmter Maschinentyp häufig in unterschiedlichen Ausstattungsvarianten hergestellt. Die verschiedenen Ausstattungsvarianten besitzen häufig unterschiedliche Anzahlen von Schaltern und Anzeigen. Häufig ist auch das Gesamtlayout der Schalter und Anzeigeeinrichtungen an der Bedienblende unterschiedlich, um eine deutlichere Abgrenzung zu schaffen. Ein weiterer Aspekt sind die unterschiedlichen Sprachen, da ein und derselbe Maschinentyp für den Verkauf in anderen Ländern mit der jeweiligen Landessprache bedruckt werden muss.

Für die unterschiedlichen Ausstattungsvarianten sind jeweils individuelle Bedienblenden im Spritzgussverfahren herzustellen und auf Vorrat zu halten.

Ähnliche Problemstellungen wie bei den Blenden für Haushaltsmaschinen ergeben sich auch bei Bedienblenden für Maschinen aller Art, insbesondere Werkzeugmaschinen, Bedienblenden für Fahrzeuge, insbesondere Cockpit-Blenden, sowie Bedienblenden für elektrische Mediageräte, wie Fernseher, Stereoanlagen, MP3-Spieler etc.

US 5,694,793 zeigt eine automatische Waschmaschine mit einem rechteckigen, elastischen Bedienfeld. Hinter dem Bedienfeld befinden sich Membranschalter, die betätigt werden können, indem das Bedienfeld an entsprechenden Stellen gedrückt wird.

GB 2 205 164 betrifft eine Vorrichtung und ein Verfahren zum Bestimmen der Position eines Bereihrungspunkts auf einem Touchscreen. Dabei werden erste Elektroden des Touchscreens mit einer Spannung beaufschlagt und der resultierende Stromfluss an zweiten Elektroden des Toouchscreens gemessen. Anhand der Verschiebungen der Stromflüsse an den einzelnen Elektroden kann die Position eds Berührungspunkts ermittelt werden.

Es ist die Aufgabe der vorliegenden Erfindung, eine verbesserte Bedienblendenanordnung sowie ein verbessertes Verfahren zum Herstellen einer solchen Bedienblendenanordnung anzugeben.

Die obige Aufgabe wird bei der eingangs genannten Bedienblendenanordnung durch das Kennzeichen des Anspruchs 1 gelöst.

Durch die Verwendung von drei Elektroden ist es im Wege der sog. Triangulation möglich, die räumliche Lage eines Bedienmittels zu errechnen. Hierzu werden in an sich bekannter Weise Koordinaten anhand trigonometrischer Beziehungen berechnet.

Ein Betätigungsabschnitt ist dann nicht mehr notwendigerweise ein mechanischer Schalter oder Taster. Vielmehr kann die Position eines Betätigungsabschnittes völlig frei definiert werden. Wenn das Bedienmittel eine bestimmte räumliche Lage in Bezug auf die Bedienblende einnimmt, so wird dies als Betätigung des Betätigungsabschnittes bewertet. Die räumliche Lage kann eine Position unmittelbar an der Außenseite der Bedienblende sein. Es kann jedoch auch eine Position beabstandet hiervon sein.

Somit ist es möglich, mit einer einheitlichen Hardware in Form der Schaltungsanordnung mit den drei Elektroden und den Auswertemitteln völlig unterschiedliche Anordnungen von Betätigungsabschnitten zu realisieren. Es versteht sich dabei, dass dies beispielsweise für unterschiedliche Ausstattungsvarianten durch unterschiedliche Arten von Anzeigen auf der Bedienblende für Bedienpersonen kenntlich gemacht werden sollte.

Tatsächlich findet die Variantenbildung der Haushaltsmaschine in Bezug auf die Betätigungsabschnitte ausschließlich durch unterschiedliche Programmierung der Schaltungsanordnung statt.

Dies ermöglicht insgesamt deutlich größere Freiheitsgrade bei der Herstellung und Individualisierung der Bedienblendenanordnung gemäß der vorliegenden Erfindung.

Die obige Aufgabe wird ferner gelöst durch ein Verfahren zum Herstellen einer Bedienblendenanordnung, die in unterschiedlichen Varianten gebaut wird, mit den Schritten:
a) Formgebendes Fertigen einer Bedienblende;
b) Zusammenbau der Bedienblende und einer Schaltungsanordnung;
c) Programmieren der Schaltungsanordnung in Abhängigkeit von der Variante, für die die Bedienblendenanordnung hergestellt wird; und
d) Bedrucken der Bedienblende in Abhängigkeit von der Variante, für die die Bedienblendenanordnung hergestellt wird, wobei
der Schritt c) und/oder der Schritt d) nach dem Schritt b) erfolgt.

Während im Stand der Technik die Programmierung und/oder die Bedruckung vor dem Zusammenbau der Bedienblende mit der Schaltungsanordnung erfolgte, findet diese Individualisierung (angepasst an unterschiedliche Ausstattungsvarianten etc.) nunmehr erst am Ende der Wertschöpfungskette statt.

Dies bringt enorme Vorteile im Ablauf der Produktion und senkt die Fertigungskosten, wobei der Grad der Individualisierung gleichzeitig erhöht wird (bzw. eine Individualisierung erstmals ermöglicht wird).

Der Schritt d) kann nach dem Schritt c) erfolgen oder umgekehrt. Die Schritte c) und d) können vorzugsweise auch gleichzeitig erfolgen, d.h. an einer Fertigungsstation, bei der die Bedienblende bedruckt und die Schaltungsanordnung programmiert werden.

Von besonderem Vorteil ist es dabei, wenn das Bedrucken der Bedienblende mit einem digitalen Druckverfahren erfolgt, beispielsweise mit einem Tintenstrahldruckverfahren.

Dies ermöglicht eine flexible Bedruckung, vorzugsweise in Abhängigkeit von ebenfalls flexiblen bereitgestellten Betätigungsabschnitten. Mit einem digitalen Druckverfahren kann in einer Bandfertigung die Bedruckung von Maschine zu Maschine unterschiedlich erfolgen. Es ist eine Losgröße von 1 möglich.

Mit anderen Worten ist es möglich, die Fertigungsstraßen effektiver zu nutzen, da, aufbauend auf der gleichen Basismaschine, alle Ausstellungsvarianten in beliebiger Reihenfolge hergestellt werden können. Hierdurch kann vor allem eine bedarfsgerechtere Fertigung erfolgen.

Generell ist es dabei auch möglich, Designer-Einzelstücke anzufertigen, also Bedienblendenoberflächen zu individualisieren. Von besonderem Vorzug ist es, dass sowohl das Programmieren als auch das Bedrucken anhand von "weichen" Parametern, nämlich anhand von Software erfolgen kann. Es ist dabei vorzugsweise nicht notwendig, "harte" Druckklischees, Druckplatten oder Ähnliches zur Bedruckung bereitzustellen.

Die wenigstens drei Elektroden, die zur Bestimmung der Lage des Bedienmittels verwendet werden, können bspw. drei punktförmige Elektroden sein. Es können auch mehr als drei punktförmige Elektroden vorgesehen sein, um bspw. größere Flächen abzudecken und/oder Mittel zur Redundanzberechnung bzw. Fehlerbereinigung zu implementieren.

Alternativ ist es auch möglich, die Elektroden als Gitter aus linienförmigen Elektroden vorzusehen, die isoliert voneinander und vorzugsweise überkreuzt angeordnet sind. Mit einer solchen Gitteranordnung lässt sich ggf. eine noch höhere Auflösung bei der Bestimmung der Position erzielen.

Die punktförmigen Elektroden bzw. Gitterlinien können bspw. als Leiterbahnen auf einer Leiterplatte der elektrischen Schaltungsanordnung vorgesehen sein.

Die Elektroden/Gitter werden vorzugsweise dicht hinter der Bedienebene angeordnet. Dabei kann das Gitter entweder als Folie bereitgestellt werden, die Leiterbahnzüge können aber auch bspw. direkt (z.B. durch Bedruckung mit Karbon) auf der Blendeninnenseite aufgebracht werden.

Die erfindungsgemäße Bedienblendenanordnung und das erfindungsgemäße Herstellungsverfahren für eine Bedienblendenanordnung sind insbesondere auf Haushaltsmaschinen anwendbar, bspw. in Form von Bedienblenden für Waschmaschinen, Wäschetrockner, Geschirrspüler etc.

Zum anderen sind die erfindungsgemäße Bedienblendenanordnung und das erfindungsgemäße Verfahren zum Herstellen einer Bedienblendenanordnung auch auf andere Anwendungen anwendbar, bspw. Bedienblendenanordnungen für Maschinen wie Werkzeugmaschinen, Steuerungsmaschinen, Steuerkonsolen für Maschinen, Fertigungsmaschinen, Fertigungsanlagen, Logistikanlagen etc. Auch können die erfindungsgemäße Bedienblendenanordnung und das Herstellungsverfahren Anwendung finden auf dem Gebiet der Fahrzeuge, insbesondere in Form von Bedienblendenanordnungen für Cockpit- oder sonstige Bedieneinrichtungen (bspw. Rear-Seat-Entertainment-Systeme).

Ferner sind die erfindungsgemäße Bedienblendenanordnung und das zugehörige Herstellungsverfahren auch anwendbar auf elektronische Geräte wie Mediageräte (Fernseher, Stereoanlagen, Surround-Systeme, MP3-Spieler, etc.).

Bei der erfindungsgemäßen Bedienblendenanordnung ist es von besonderem Vorteil, wenn das Bedienmittel ein Finger ist.

Bei dieser Ausführungsform kann unmittelbar die räumliche Lage des Fingers in Bezug auf die Bedienblende und die dort programmierten Betätigungsabschnitte ermittelt werden, um festzustellen, ob ein Betätigungsabschnitt betätigt werden soll oder nicht.

Es ist weiterhin von Vorteil, wenn die Punkt-Elektroden im Bereich von Ecken eines Bedienfeldes der Bedienblende angeordnet sind, innerhalb dessen die Betätigungsabschnitte angeordnet sind.

Dies optimiert die Sicherheit bei der Erkennung der Lage des Bedienmittels.

Generell ist es jedoch auch denkbar, dass sich ein Bedienfeld über das Feld hinaus erstreckt, das durch die Elektroden definiert ist.

Alternativ oder zusätzlich ist es möglich, die Elektroden als leitendes Gitter aus Leiterbahnzügen auszubilden, wie oben erwähnt.

Gemäß einer weiteren bevorzugten Ausführungsform ist wenigstens ein Betätigungsabschnitt an der Außenseite der Bedienblende durch eine Bedruckung dargestellt. Dabei erfolgt die Bedruckung vorzugsweise im Rahmen des erfindungsgemäßen Verfahrens.

Es ist jedoch alternativ oder zusätzlich möglich, dass wenigstens ein Betätigungsabschnitt an der Außenseite der Bedienblende durch eine Anzeige auf einem Monitor (Display) dargestellt ist.

Unter einem Monitor soll vorliegend ein Display mit einer größeren Anzahl von Spalten und Zeilen verstanden werden, also eine graphikfähige Anzeige.

Hierbei ist es möglich, an der Vorderseite des Monitors Betätigungsabschnitte zu definieren, so dass der Monitor nach der Art eines Touch-Screen-Monitors betätigbar ist.

Vorzugsweise ist zumindest ein Teil der Anzeigeabschnitte ebenfalls durch einen solchen Monitor realisiert.

Hierbei ist von besonderem Vorteil, dass sowohl die Anzeigeabschnitte als auch die Bedienungsabschnitte völlig frei programmierbar sind, dass also mit ein und derselben Hardware unterschiedliche Ausstattungsvarianten realisierbar sind.

Es ist hierbei auch denkbar, dass eine Maschine nach Inbetriebnahme umprogrammiert wird. Es ist beispielsweise denkbar, durch eine solche Umprogrammierung weitere Funktionen frei zu schalten, die in einer Basisausstattung der Maschine nicht enthalten sind. So kann ein Anwender solche Funktionen nach Bedarf zukaufen (bei einer Waschmaschine beispielsweise für zusätzliche Waschprogramme oder Ähnliches).

Von besonderem Vorteil ist es hierbei, wenn der Monitor ein Folienmonitor ist. Zwar ist es auch denkbar, einen herkömmlichen LCD-Monitor zu verwenden. Ein Folienmonitor hat jedoch den Vorteil, dass er unmittelbar an die häufig gewölbte Form der Bedienblende angepasst werden kann. Der Folienmonitor kann beispielsweise auf der Außenseite der Bedienblende aufgebracht sein (aufgeklebt oder laminiert). Es ist auch möglich, die derart vorbereitete flexible Folie mit einem Kunststoff zu hinterspritzen, um so die Bedienblende zu bilden.

Es ist ferner besonders vorteilhaft, wenn der Monitor ein OLED-Monitor ist.

Derartige OLEDs (Organic Light Emitting Devices) können sich in einer Folienschicht befinden.

Derartige OLEDs bieten einige technische Vorteile, beispielsweise einen großen Betrachtungswinkel sowie eine sehr schnelle Reaktionszeit. Auch sind die Schwarzwerte und der Kontrast gut. Eine Hintergrundbeleuchtung ist in der Regel nicht erforderlich, was die Fertigung von extrem dünnen Displays (Monitoren) erlaubt.

Gemäß einer weiteren bevorzugten Ausführungsform weist wenigstens ein Anzeigeabschnitt eine LED auf, die an einer Leiterplatte im Bereich der Innenseite der Bedienblende angeordnet ist.

Durch eine solche LED kann auf vergleichsweise einfache und kostengünstige Weise eine Anzeige eines Zustands erfolgen (beispielsweise Signalisierung des Einschaltens eines bestimmten Waschprogrammes oder dgl.).

Da für die elektrische Schaltungsanordnung in der Regel ohnehin eine Leiterplatte vorgesehen ist, kann daran auch eine LED oder mehrere LEDs befestigt werden.

Die Leiterplatte kann starr sein. Von besonderem Vorzug ist es jedoch, wenn die Leiterplatte aus einem flexiblen Material hergestellt und zumindest im Bereich eines Anzeigefeldes, in dem die Anzeigeabschnitte angeordnet sind, etwa parallel zu der Bedienblende angeordnet ist.

Bei dieser Ausführungsform ist es möglich, die Anzeigeabschnitte unabhängig von der jeweiligen Position auf der Leiterplatte identisch auszubilden.

Ferner ist es hierbei vorteilhaft, wenn die Bedienblende im Bereich von zumindest einem Anzeigeabschnitt eine Durchbrechung aufweist, durch die hindurch Licht der LED leuchtet.

Hierbei ist die Bedienblende in der Regel opak und ein Anzeigeabschnitt lässt sich somit mittels der Durchbrechung genau umgrenzen. Die Durchbrechung kann mit einem durchsichtigen Stück verschlossen sein, um Wasserdichtigkeit zu gewährleisten.

Es ist jedoch auch möglich, dass die Bedienblende insgesamt transparent ausgebildet ist und dass sie mit einer opaken Beschichtung/Farbe versehen ist, die lediglich im Bereich einer solchen Durchbrechung maskiert bzw. weggelassen wird.

Gemäß einer weiteren alternativen Ausführungsform weist die Bedienblende im Bereich von zumindest einem Anzeigeabschnitt einen Wandabschnitt dünnerer Wandstärke auf, durch den hindurch Licht der LED leuchtet.

Bei dieser Ausführungsform kann der Fertigungsaufwand insgesamt noch verringert werden. Da die Bedienblende in der Regel in einem Spritzgussverfahren hergestellt wird, lassen sich solche Wandabschnitte dünnerer Wandstärke leicht realisieren.

Ferner ist es vorteilhaft, wenn ein Anzeigefeld ein Rasterfeld mit einer Mehrzahl von festen Positionen aufweist, von denen zumindest einige mit LEDs bestückt sind.

Bei dieser Ausführungsform können unterschiedliche Varianten der Haushaltsmaschine dadurch realisiert werden, dass LEDs je nach Bedarf an unterschiedlichen Positionen des Rasterfeldes bestückt werden.

Der Hardwareaufwand ist jedoch insgesamt verringert, da die Leiterplatte für unterschiedliche Varianten in der Regel mit einem einheitlichen Layout hergestellt werden kann.

Von besonderem Vorteil ist es ferner, wenn die LEDs jeweils über Lichtleiter mit der Bedienblende gekoppelt sind.

Zwar ist es generell auch denkbar, die LED-Strahlen mittels einer jeweiligen Linse zu fokussieren. Die Verwendung von Lichtleitern hat jedoch den Vorteil, dass die Fokussierung sich in der Regel einfacher realisieren lässt.

Vorteilhaft ist es auch die Verwendung von flexiblen Lichtleitern, da damit verschiedene Leuchtpunkte erreicht werden können, auch wenn eine einheitliche Platine verwendet wird, bei der die Position der LEDs festgelegt ist.

Von besonderem Vorteil ist es auch, wenn wenigstens ein Lichtleiter gekröpft ausgebildet und mit einer LED verbunden ist, derart, dass die LED je nach Drehposition des Lichtleiters unterschiedliche Anzeigeabschnitte beleuchten kann.

Bei dieser Ausführungsform kann die Realisierung unterschiedlicher Varianten dadurch erfolgen, dass der gekröpfte Lichtleiter je nach Ausstattungsvariante in einer anderen Drehposition angebracht wird. Hierdurch kann ebenfalls bei im Wesentlichen gleichem Layout der Leiterplatte eine große Anzahl an Varianten hinsichtlich der Anordnung der Anzeigeabschnitte realisiert werden.

Insgesamt ist es ferner vorteilhaft, wenn die Schaltungsanordnung einen Näherungssensor aufweist, der das Annähern des Bedienmittels erkennt und bestimmte Schaltungsabschnitte bei sich annäherndem Bedienmittel aktiviert.

Bei dieser Ausführungsform können Teile der elektrischen Schaltungsanordnung in einen Schlafzustand versetzt werden, um so den Energieverbrauch zu verringern. Bei Annäherung des Bedienmittels wird dies von dem Näherungssensor erkannt und die schlafenden Schaltungsteile können geweckt werden. Dies gilt insbesondere für Anzeigeeinrichtungen wie einen Monitor oder LEDs, die folglich nur dann Strom verbrauchen, wenn eine Anzeige von dem Benutzer auch tatsächlich gewünscht ist.

Von besonderem Vorzug ist es hierbei, wenn der Näherungssensor mittels der Anordnung aus den wenigstens drei Elektroden und den Auswertemitteln realisiert wird, wenn also bei Annäherung eines Bedienmittels (eines Fingers) an das Bedienfeld hierdurch erkannt wird, dass demnächst eine Bedienung erfolgen soll.

Mit der erfindungsgemäßen Touch-Field-Elektronik lässt sich nicht nur eine Näherungsfunktion implementieren. Es können vorzugsweise bestimmte Bewegungsmuster erfasst und ausgewertet werden. Hierdurch kann auch erfasst werden, welche Intention der Benutzer hat.

Sofern man sich bspw. bei einer laufenden Haushaltsmaschine einem Schalter/einer Taste zur Türöffnung nähert, kann quasi antizipierend eine Abschaltung sich bewegender, insbesondere drehender Teile (wie Sprüharme oder Waschtrommeln) durchgeführt werden. Hierdurch kann in den nicht seltenen Fällen, dass ein Benutzer bei laufender Haushaltsmaschine noch etwas "nachlegen" möchte, eine erhöhte Sicherheit erreicht werden.

Bspw. kann auch eine stufenweise Abschaltung erfolgen, so dass bei Erkennung eines Bewegungsmusters hin zu einem Türschalter die Bewegungsenergie (Drehzahl) gesenkt wird, so dass die Fördermenge einer Umwälzpumpe reduziert wird, oder Ähnliches, wobei eine endgültige Abschaltung erst bei konkretem Öffnen einer Tür erfolgen kann.

Bei anderen Anwendungsfällen kann ein solches Bewegungsmuster bspw. eine Potentiometerfunktion nachbilden. Falls eine Person bspw. eine Hand (berührungslos) vor der Bedienblende aufwärts oder abwärts bewegt (oder nach links oder nach rechts), kann hierdurch eine Potentiometerfunktion erkannt und realisiert werden. Mit anderen Worten kann bspw. ein Autofahrer durch einen Wink an der Bedienblende vorbei nach unten die Lautstärke reduzieren, durch einen Wink nach oben die Lautstärke erhöhen.

Gemäß einer weiteren bevorzugten Ausführungsform ist eine Datenschnittstelle vorgesehen, über die die elektrische Schaltungsanordnung neu oder umprogrammiert werden kann.

Durch diese Maßnahme können auch nach vollständiger Herstellung der Applikation Korrekturen vorgenommen werden, bspw. in einer Qualitätskontrolle, aber auch beim Endkunden. Auch kann eine solche Datenschnittstelle zur "Aufrüstung" verwendet werden, um bspw. weitere Waschprogramme zu implementieren.

Ferner ist es vorteilhaft, wenn die elektrische Schaltungsanordnung dazu ausgelegt ist, dass über Eingabe an dem Bedienfeld Betätigungsabschnitte wie Tasten und Tastenfunktionen definiert werden können.

Auch hierdurch ist noch nach Herstellung der Applikation eine Korrektur und/oder Aufrüstung der Maschine möglich.

Insgesamt lässt sich mit der erfindungsgemäßen Bedienblendenanordnung ein Technologiebaukasten bestehend aus einer sog. Touch-Field-Elektronik (Elektroden plus Auswertemittel), einer variablen Bedruckung (digital, z.B. mittels Inkjet) und einer variablen Beleuchtung/Anzeige realisieren.

Dabei ermöglicht die Touch-Field-Elektronik eine flexible Anordnung von Betätigungsabschnitten (d.h. Bedienelementen), eine flexible Tastenbelegung und eine Individualisierung von Funktionen. Es versteht sich, dass es zum besseren Handling bevorzugt ist, wenn einer Betätigung eines solchen "imaginären" Betätigungsabschnittes eine akustische und/oder optische Quittierung folgt. Die Elektroden bzw. Sensoren für das Touch Field können auf einer starren oder flexiblen Leiterplatte oder auf einem MID-Kunststoffteil (Mold Integrated Device) ausgebildet sein. Die Festlegung der Betätigungsabschnittsposition ist am Ende der Wertschöpfungskette möglich. Es versteht sich auch, dass eine Potentiometerfunktion realisierbar ist, indem benachbart Betätigungsabschnitte entsprechend programmiert werden. Auch ist eine Online-Konfiguration durch den Endverbraucher möglich. Ferner ist generell eine kundenspezifische Bedienoberfläche auf Kundenwunsch sogar teilweise nach dem Kauf des Gerätes möglich. Auch eine Identifikation des Benutzers (Kindersicherung) ist realisierbar.

Die so flexibel angeordneten Betätigungsabschnitte können entsprechend flexibel dargestellt werden, beispielsweise durch eine flexible Bedruckung (Digitaldruck). Hierbei ist eine Bedruckung auch von stark gekrümmten Flächen möglich, und zwar auf vorzugsweise berührungslose Art und Weise.

Es können Designer-Einzelstücke realisiert werden. Wie oben erwähnt, ist eine Online-Katalogauswahl und Fertigung "on demand" möglich.

Auch hierbei erfolgt die Variantenfestlegung erst am Ende der Wertschöpfungskette, mit anderen Worten erfolgt die Bedruckung vorzugsweise an bereits komplett montierten Blenden.

Generell ist es auch möglich, elektrisch leitende Schichten auf die Bedienblende zu drucken, oder z.B. fluoreszierende Farben oder Ähnliches, um eine entsprechende Signalwirkung zu erzeugen.

Auch ist eine variable Beleuchtung realisierbar. Zum einen können solche Leuchten in Schichten aufgedruckt und elektronisch angesteuert sein.

Es ist möglich, die Beleuchtung durch einen flexiblen Monitor auf der Blendenoberseite (Folienmonitor bzw. organische LEDs) zu realisieren.

Bei Verwendung von LEDs ist es denkbar, für diese einen Array bzw. ein Raster vorzusehen, so dass eine LED-Bestückung "on demand" möglich ist.

Entsprechend kann ein Lichtleiterraster, beispielsweise mittels gekröpfter Lichtleiter, vorgesehen werden, um eine größtmögliche Flexibilität zu realisieren.

Die Bedienblende kann aus transparentem Kunststoff , hergestellt und bedruckt/lackiert sein, wobei an Anzeigeabschnitten die Bedruckung/Lackierung freigestellt ist (durch Maske oder Abtragen von Lack oder Ähnliches). Es ist jedoch auch möglich, die Bedienblenden im Bereich von Anzeigeabschnitten mit unterschiedlichen (dünneren) Wandstärken auszubilden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Querschnittsansicht durch einen Abschnitt einer Haushaltsmaschine mit einer erfindungsgemäßen Bedienblendenanordnung;
- Fig. 2: eine schematische Darstellung einer Touch-Field-Elektronik mit Auswerteelektronik;
- Fig. 3: eine schematische perspektivische Ansicht einer weiteren Ausführungsform einer erfindungsgemäßen Bedienblendenanordnung;
- Fig. 4: eine schematische perspektivische Ansicht einer weiteren Ausführungsform einer erfindungsgemäßen Bedienblendenanordnung;
- Fig. 5: eine schematische perspektivische Ansicht einer weiteren Ausführungsform einer erfindungsgemäßen Bedienblendenanordnung;
- Fig. 6: eine schematische Darstellung eines gekröpften Lichtleiters und der hiermit realisierbaren Anzeigeabschnittspositionen;
- Fig. 7: eine schematische perspektivische Ansicht einer weiteren Ausführungsform einer erfindungsgemäßen Bedienblendenanordnung; und
- Fig. 8: eine schematische Darstellung eines erfindungsgemäßen Verfahrens zum Herstellen einer Bedienblendenanordnung in Form eines Flussdiagramms.

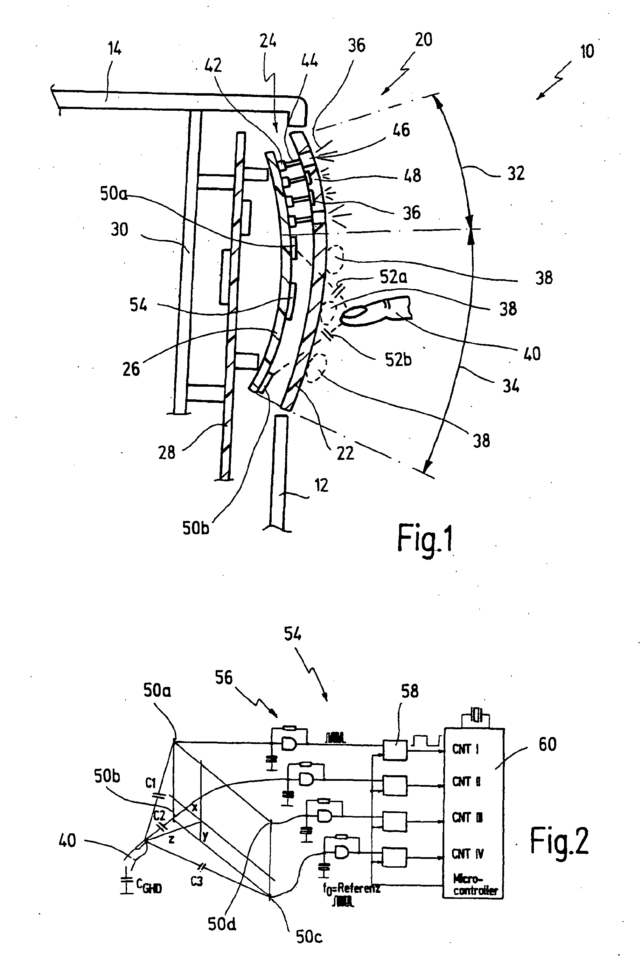

In Fig. 1 ist als Beispiel einer Applikation eine Haushaltsmaschine, beispielsweise in Form einer Waschmaschine oder eines Wäschetrockners, generell mit 10 bezeichnet.

Die Haushaltsmaschine 10 weist in an sich bekannter Weise ein Frontblech 12 und einen Deckel 14 auf.

Zwischen dem Frontblech 12 und dem Deckel 14 ist eine Bedienblendenanordnung 20 vorgesehen, an der die wesentlichen Elemente zum Bedienen und zur Kontrolle der Haushaltsmaschine zusammengefasst sind.

Die Bedienblendenanordnung 20 weist eine Bedienblende 22 in Form eines Spritzgussteils auf. Die Bedienblende 22 weist aus optischen Gründen eine im Querschnitt leicht gebogene Form auf und erstreckt sich zwischen einem Abschnitt des Frontbleches 12 und dem Deckel 14. Es versteht sich, dass zwischen der Bedienblende 22 und dem Frontblech 12 bzw. dem Deckel 14 geeignete Maßnahmen zur Abdichtung (Wasser- bzw. Spritzschutz) vorgesehen sind. Diese Mittel sind jedoch aus Gründen einer übersichtlicheren Darstellung nicht gezeigt.

Die Bedienblendenanordnung 20 weist ferner eine elektrische Schaltungsanordnung 24 auf, die Hardware zur Verarbeitung von Betätigungsbefehlen und zur Quittierung und sonstigen Anzeige von Maschinenzuständen beinhaltet.

Die elektrische Schaltungsanordnung 24 ist im Wesentlichen an einer ersten Leiterplatte 26 realisiert. Die erste Leiterplatte kann aus starrem Material sein. Vorliegend ist die erste Leiterplatte 26 aus einem flexiblen Material hergestellt und ist im Bereich der Innenseite der Bedienblende 22 etwa parallel zu deren Erstreckung ausgerichtet.

Die erste Leiterplatte 26 ist innerhalb der Bedienblende 22 relativ hierzu gelagert. Generell ist die erste Leiterplatte 26 bevorzugt direkt an der Bedienblende 22 festgelegt.

Die erste Leiterplatte 26 kann die gesamte Elektrik/Elektronik, bspw. einschließlich der Leistungssteuerung der Haushaltsmaschine einschließlich von Leistungselektronik etc. beinhalten.

Es gibt jedoch auch Varianten mit mehr als einer Leiterplatte.

In Fig. 1 ist eine solche Variante mit einer zweiten Leiterplatte 28 gezeigt, die im dargestellten Beispiel die eigentliche Steuerung der Haushaltsmaschine einschließlich von Leistungselektronik etc. beinhaltet.

Die zweite Leiterplatte 28 kann an der ersten Leiterplatte 26 und damit auch mittelbar an der Bedienblende 22 gelagert sein. Es ist jedoch auch möglich, die zweite Leiterplatte 28 (wie gezeigt) an einem Träger 30 zu lagern, der mit dem Gehäuse (dem Deckel 14 bzw. einem sonstigen Gehäuseteil der Haushaltsmaschine 10) verbunden ist.

Die flexible erste Leiterplatte 26 kann auf einen geeigneten starren Träger aufgezogen sein, was in Fig. 1 nicht näher dargestellt ist. Die erste Leiterplatte 26 kann jedoch auch unmittelbar auf die Rückseite der Bedienblende 22 aufgezogen sein.

Die Bedienblendenanordnung 20 weist ein Anzeigefeld 32 und ein Bedienfeld 34 auf. Aus Gründen einer übersichtlicheren Darstellung sind diese Felder 32, 34 in Fig. 1 benachbart zueinander angeordnet. Sie können jedoch auch ineinander verschachtelt oder identisch sein.

Das Anzeigefeld 32 weist eine Mehrzahl von Anzeigeabschnitten 36 auf, die jeweils zur Anzeige eines bestimmten Zustandes der Haushaltsmaschine 10 oder Ähnliches dienen.

In entsprechender Weise weist das Bedienfeld 34 eine Mehrzahl von Betätigungsabschnitten 38 auf. Die Betätigungsabschnitte 38 sind im vorliegenden Fall als unscharf abgegrenzte räumliche Bereiche an der Vorderseite der Bedienblende 22 dargestellt.

Zum Bedienen der Betätigungsabschnitte 38 dient ein Finger 40 einer Bedienperson (Bedienmittel).

Sofern der Finger 40 in den Bereich von einem der Betätigungsabschnitte 38 geführt wird, wird dies berührungslos erkannt, und zwar mittels einer noch nachstehend zu erläuternden Touch-Field-Elektronik.

Da die Betätigung eines Betätigungsabschnitts 38 folglich keine mechanische Bewegung eines Schalter- oder Tasterelementes beinhaltet, ist es bevorzugt, wenn diese Betätigung optisch und/oder akustisch quittiert wird. Zur optischen Quittierung kann einer der jeweiligen Anzeigeabschnitte 36 dienen.

Es versteht sich, dass in der Praxis daher häufig einem Betätigungsabschnitt 38 ein entsprechender Anzeigeabschnitt 36 räumlich direkt zugeordnet ist.

Ein Anzeigeabschnitt 36 kann im vorliegenden Fall gebildet sein durch eine LED 42, die an der Vorderseite der ersten Leiterplatte 26 angeordnet ist. Das Licht der LED 42 kann dann über einen Lichtleiter 44 beispielsweise zu einer Durchbrechung 46 in der Bedienblende 22 (oder in einer opaken Beschichtung) geführt werden. Alternativ ist es möglich, das Licht einer LED 42 über einen Lichtleiter 44 zu einem Bereich 48 dünnerer Wandstärke zu führen.

Es versteht sich hierbei, dass die Durchbrechung 46 mit einem durchsichtigen Stopfen, bspw. in Form eines Lichtleiters verschlossen werden kann, um den Spritzschutz zu gewährleisten. Die Fertigung ist bei Ausbildung der Anzeigeabschnitte 36 mittels der Teile dünnerer Wandstärke 48 einfacher zu bewerkstelligen.

An der ersten Leiterplatte 26 ist eine Mehrzahl von wenigstens drei Elektroden 50a, 50b angeordnet, und zwar in einer Ebene etwa parallel zu der Bedienblende 22. Von den drei Elektroden sind in Fig. 1 nur zwei dargestellt. Die Leiterplatte 26 trägt ferner eine Auswerteelektronik 54, die gemeinsam mit den Elektroden 50 eine Touch-Field-Elektronik bildet.

Das Funktionsprinzip dieser Touch-Field-Elektronik besteht darin, dass ein zwischen den Elektroden 50 und einem sich annähernden Bedienmittel (Finger 40) vorhandenes Feld (beispielsweise ein elektrostatisches Feld) erfasst und gemessen wird. Dies ist in Fig. 1 schematisch durch Kondensatoren 52a bzw. 52b dargestellt. Die Touch-Field-Elektronik misst sozusagen die Kapazität zwischen den jeweiligen Elektroden 50 und dem Finger 40, wobei die Kapazität ein Maß für den Abstand zwischen dem Finger 40 und der jeweiligen Elektrode 50 ist.

Durch die Verwendung von wenigstens drei Elektroden 50 ist es dann im Wege der sog. Triangulation möglich, die Position des Fingers 40 in Bezug auf die drei Elektroden 50 zu bestimmen. Demzufolge kann durch die Auswerteelektronik 54 auch die relative Lage des Fingers 40 in Bezug auf den vorderen Bereich der Bedienblende 22 erfasst werden. Wenn der Finger 40 demzufolge in einen der Betätigungsabschnitte 38 bewegt wird, so kann dies von der Touch-Field-Elektronik erkannt und als Betätigung dieses Betätigungsabschnitts 38 gewertet werden.

Aus dem Obenstehenden ergibt sich, dass demzufolge die Lage der Betätigungsabschnitte 38 völlig frei definierbar ist. Durch geeignete Programmierung der Auswerteelektronik 54 kann ein beliebiger Ort im Bereich der Vorderseite der Bedienblende 22 als ein Betätigungsabschnitt 38 definiert werden.

Mit der gleichen Basiselektronik lässt sich demzufolge eine Vielzahl unterschiedlicher Bedienblenden 20 mit unterschiedlichen Positionen von Betätigungsabschnitten 38 definieren. Dem kann eine entsprechend variable Beschriftung der Bedienblende 22 folgen (beispielsweise durch eine digitale Bedruckung in Abhängigkeit von der Programmierung der Auswerteelektronik 54).

Das Anzeigefeld 30 kann dabei auch variabel ausgestaltet werden. Beispielsweise können an der ersten Leiterplatte 26 eine Vielzahl von möglichen Bestückungspositionen für LEDs in Form eines Rasters vorgesehen werden. Je nach realisierter Variante der Haushaltsmaschine werden dann LEDs an geeigneten Positionen bestückt.

Fig. 2 zeigt in schematischer Form die Touch-Field-Elektronik mit vier Elektroden 50a - 50d. Zur Berechnung der relativen Lage des Fingers 40 in Bezug auf die Elektroden werden generell nur drei Elektroden verwendet, wie es auch in Fig. 2 dargestellt ist.

Die vierte Elektrode kann jedoch zur Verbesserung der Genauigkeit bei der Auswertung verwendet werden.

Die Elektroden 50 sind jeweils über eine Oszillatoreinheit 56 mit einem Vergleicher 58 verbunden. In dem Vergleicher 58 findet eine Auswertung statt, inwieweit eine Frequenzverschiebung im Bereich der Oszillatoreinheit 56 stattgefunden hat. Eine solche Frequenzverschiebung ergibt sich durch Veränderung der jeweiligen Kapazität an der jeweiligen Elektrode 50. Dies ist in Fig. 2 schematisch durch Kondensatoren C1, C2, C3 dargestellt.

Die Ausgänge der Vergleicher 58 sind mit einem Mikrocontroller 60 verbunden, der die Frequenzverschiebungen erkennt, auswertet und in Positionsangaben umrechnet. Diese Positionsangaben beinhalten dann die Koordinaten des Fingers 40 in x-, y- und z-Richtung in Bezug auf einen Ursprungsort, der beispielsweise in der Ebene der Elektroden 50 liegen kann (wie es in Fig. 2 dargestellt ist).

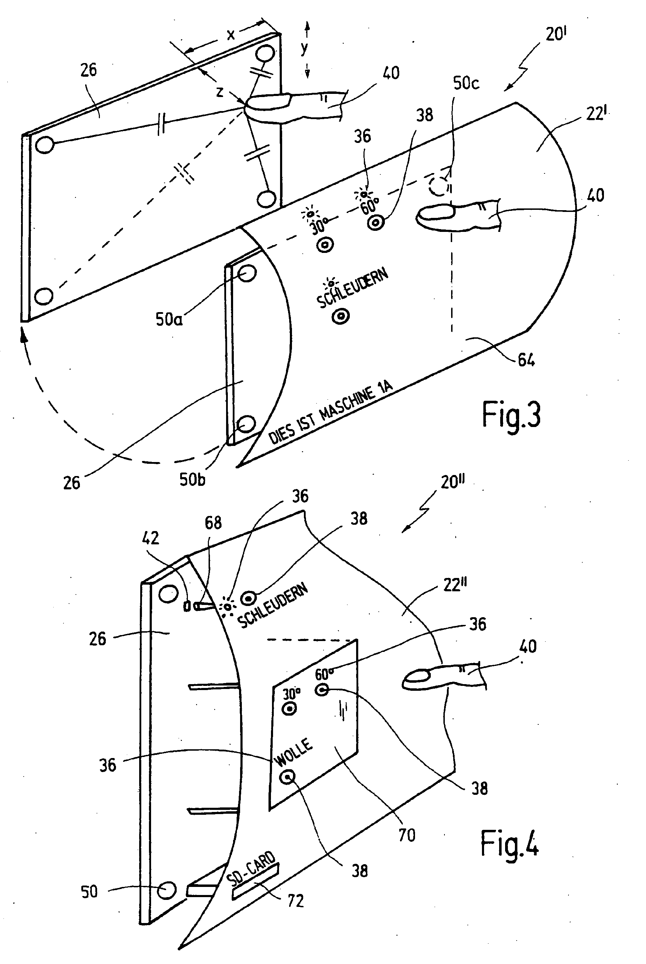

Fig. 3 zeigt eine alternative Ausführungsform einer erfindungsgemäßen Bedienblendenanordnung 20'.

Die Bedienblendenanordnung 20' entspricht hinsichtlich Aufbau und Funktionsweise der Bedienblendenanordnung 20 der Fig. 1. Im Folgenden wird lediglich auf die Unterschiede eingegangen.

So ist zu erkennen, dass die Betätigungsabschnitte 38 jeweils durch eine entsprechende Bedruckung dargestellt sind. Entsprechend ist den Anzeigeabschnitten 36 jeweils eine Beschriftung zugeordnet, um darzustellen, was mit dem jeweiligen Anzeigeabschnitt 36 angezeigt werden soll.

In Fig. 3 ist ferner dargestellt, dass an der Bedienblende 22' eine individuelle Bedruckung 64 vorgesehen sein kann, beispielsweise auf Kundenwunsch. Da die Bedruckung der Bedienblende 22' erst am Ende der Wertschöpfungskette stattfindet, ist eine solche Individualisierung vergleichsweise einfach zu realisieren.

Fig. 4 zeigt eine weitere Ausführungsform einer erfindungsgemäßen Bedienblendenanordnung 20". Diese entspricht hinsichtlich Aufbau und Funktionsweise generell der Bedienblendenanordnung 20 der Fig. 1. Im Folgenden wird lediglich auf Unterschiede eingegangen.

Man erkennt zum einen, dass einer LED 42 eine Linse 68 zugeordnet werden kann, mit der das LED-Licht auf die Rückseite der Bedienblende 22" fokussiert werden kann, um so einen präzise abgegrenzten Anzeigeabschnitt 36 zu definieren.

Ferner ist in Fig. 4 zu erkennen, dass das Anzeigefeld 32 neben einigen LED-Anzeigeabschnitten 36 einen Monitor in Form eines LCD-Displays 70 beinhaltet.

Der Monitor 70 stellt Anzeigeabschnitte 36 dar, und zwar durch eine geeignete Programmierung. Ferner ist es möglich, die Touch-Field-Elektronik so zu programmieren, dass an der Vorderseite des Monitors 70 Betätigungsabschnitte 38 angeordnet sind. Demzufolge kann der Monitor wie ein Touch-Panel bedient werden, obgleich die Betätigung nicht über den Monitor 70 erfolgt, sondern indirekt über die Touch-Field-Anordnung aus den Elektroden 50 und der Auswerteelektronik 54.

In Fig. 4 ist ferner eine Schnittstelle zum Datenaustausch (bspw. als Kartenleser in Form eines sD-Kartenlesers) 72 gezeigt. Hiermit ist es möglich, die Programmierung, bspw. durch Einschub unterschiedlicher sD-Karten zu verändern. Beispielsweise kann eine Basismaschine durch eine zusätzlich gekaufte sD-Karte derart aufgerüstet werden, dass zusätzliche Funktionen wie z.B. Waschprogramme angeboten werden. Andere Arten von Schnittstellen sind eine USB-Schnittstelle, eine Schnittstelle für eine CF-Karte, eine RS232-Schnittstelle, etc.

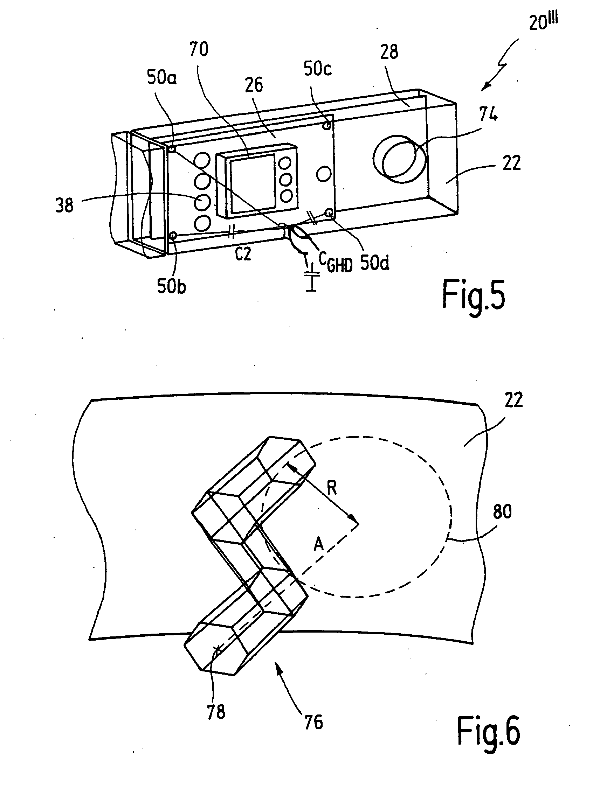

Fig. 5 zeigt eine weitere Ausführungsform einer erfindungsgemäßen Bedienblendenanordnung 20"'. Diese entspricht hinsichtlich Funktion und Aufbau der Bedienblendenanordnung 20 der Fig. 1. Im Folgenden wird lediglich auf Unterschiede eingegangen.

Man erkennt zum einen, dass an der zweiten Leiterplatte 28 ein Netz-Drehschalter 74 vorgesehen ist. Dieser dient auch zur Betätigung der Haushaltsmaschine, beinhaltet jedoch einen mechanischen Schalter, mittels dessen eine Trennung vom Netz realisiert werden kann.

Alternativ ist es jedoch auch möglich, An- und Ausschalter einer Haushaltsmaschine elektronisch zu realisieren, indem die Touch-Field-Elektronik beispielsweise als Näherungssensor genutzt wird.

Fig. 6 zeigt einen gekröpften Lichtleiter 76, der folgendermaßen zur Erhöhung der Variabilität bei der Herstellung der erfindungsgemäßen Bedienblendenanordnung verwendet werden kann. Der gekröpfte Lichtleiter 76 kann an einem Ende einer LED-Position 78 zugeordnet werden. Durch Verdrehen des Lichtleiters 76 um eine Achse konzentrisch zur LED-Position 78 können dann am anderen Ende unterschiedliche Anzeigeabschnitte 36 realisiert werden. Ein Kreis möglicher Anzeigeabschnitte ist in Fig. 6 schematisch mit 80 bezeichnet.

Durch diese Ausführungsform ist es möglich, mit nur wenigen festen LED-Positionen an der ersten Leiterplatte 26 eine Vielzahl von unterschiedlichen Anzeigeabschnitten 36 zu realisieren, um so eine Variantenbildung zu ermöglichen.

Der Lichtleiter 76 ist im dargestellten Beispiel im Querschnitt sechseckig. Die Wabenform kann dazu dienen, in Bezug auf die Achse A insgesamt sechs unterschiedliche Anzeigeabschnitte 36 auf dem Kreis 80 darzustellen. Ferner können derartige Lichtleiter 76 benachbart zueinander angeordnet werden, wobei die Seitenflächen sich berühren. Hierdurch kann insgesamt auch eine größere Stabilität einer solchen Lichtleiteranordnung aus mehreren Lichtleitern 76 erzielt werden.

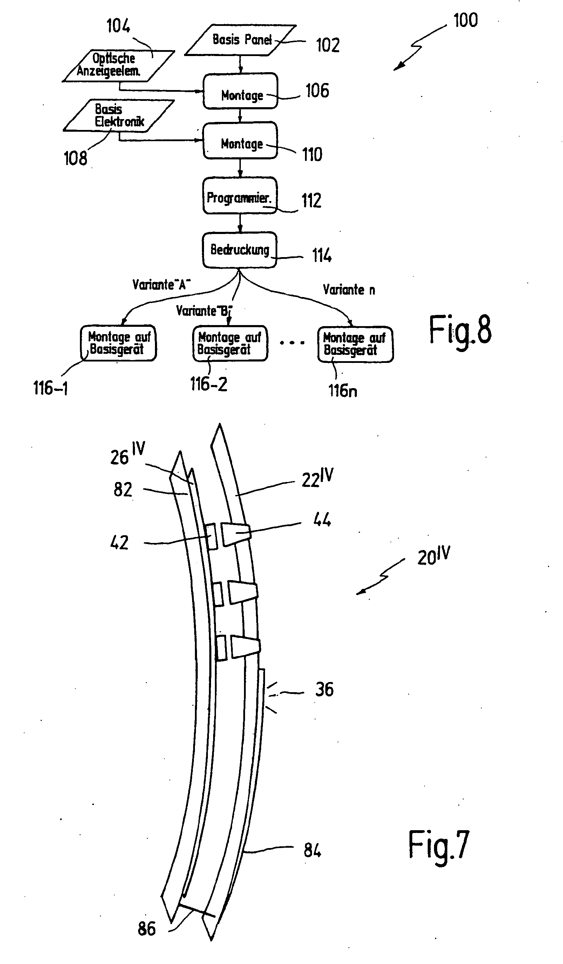

Fig. 7 zeigt eine weitere Ausführungsform einer erfindungsgemäßen Bedienblendenanordnung 20^{IV}. Diese entspricht hinsichtlich Aufbau und Funktionsweise der Bedienblendenanordnung 20 der Fig. 1. Im Folgenden wird lediglich auf Unterschiede eingegangen.

Zum einen ist zu erkennen, dass die flexible Leiterplatte 26^{IV} an einem festen, gebogenen Leiterplattenträger 82 gelagert ist. Dieser ist an der Rückseite der ersten Leiterplatte 26^{IV} angeordnet.

Ferner ist zu erkennen, dass an der Vorderseite der Bedienblende 22^{IV} ein Folienmonitor 84 in Form eines OLED-Monitors angeordnet ist. Dieser ist über schematisch angedeutete Verbindungskabel 86 mit der Leiterplatte 26^{IV} verbunden und dient dazu, wenigstens einen Anzeigeabschnitt 36 zu realisieren.

Generell ist in Bezug auf die Ausbildung der Touch-Field-Elektronik noch Folgendes anzumerken. Dies gilt für sämtliche zuvor genannten Ausführungsformen.

Die Elektrodenstruktur aus den einzelnen Punkten 50 oder aus einzelnen Leiterbahnen, die ein X-Y-Gitter bilden, werden vorzugsweise direkt auf oder sehr nahe an der Innenseite der Bedienblende 22 angebracht. Dies kann erfolgen durch Auflaminieren einer Folie, durch Bedrucken mit elektrisch leitenden Materialien bzw. durch sogenannte MID-Konstruktionen (MID = Mold Integrated Device).

Derartige MIDs sind Formteile mit integrierter Leiterbildstruktur und lassen sich auf verschiedenste Weise herstellen, bspw. durch Einkomponentenspritzguss mit anschließender chemischer Behandlung und Strukturierung von Leiterbahnen durch Laser und anschließender Metallisierung, durch Zweikomponentenspritzguss und anschließender Metallisierung bzw. durch Insert Molding.

Das Bedrucken kann wie oben durch konventionelle Druckverfahren, vorzugsweise aber auch durch digitale Druckverfahren erfolgen.

Beim Auflaminieren von Folie kann eine ganzflächige, strukturierte Folie auf die Innenseite der Bedienblende geklebt werden. Es können aber auch nur einzelne Abschnitte der Innenseite mit Folienstücken versehen sein.

Die Kontaktierung zwischen der Bedienblende als Schaltungsträger und einer separat vorgesehenen Leiterplatte für die Steuerung kann über Kontaktfedern, Löt- oder elektrische Klebeverbindungen erfolgen.

Eine weitere Möglichkeit ist die Verwendung von Starr-Flex-Leiterplatten, bei der starre Leiterplattenbereiche durch flexible Leiterplattenbereiche verbunden sind. Hierbei könnte bspw. ein starrer Leiterplattenbereich an der Innenseite der Bedienblende montiert sein und über einen flexiblen Leiterplattenbereich mit einem weiteren starren Leiterplattenbereich (für Steuerungszwecke) verbunden sein.

In Fig. 8 ist in schematischer Form eine Ausführungsform des erfindungsgemäßen Verfahrens zum Herstellen einer Bedienblendenanordnung in Form eines Flussdiagramms gezeigt.

Das Verfahren ist in Fig. 8 generell mit 100 bezeichnet und beinhaltet einen Schritt 102, eine Bedienblende 22 (Basispanel) herzustellen und für die Herstellung der Bedienblendenanordnung 20 bereitzustellen.

In entsprechender Weise werden optische Anzeigeelemente, beispielsweise in Form von LEDs, in Form eines Folienmonitors und/oder in Form eines LCD-Monitors, bereitgestellt (Schritt 104). Im Schritt 106 erfolgt eine Montage dieser optischen Anzeigeelemente an der Bedienblende 22. In einem weiteren Schritt 108 wird die Basiselektronik bereitgestellt, d.h. die elektrische Schaltungsanordnung 24 mit der Leiterplatte 26. In einem Schritt 110 erfolgt eine Montage der Bedienblende 22 an der elektrischen Schaltungsanordnung 24 (Zusammenbau von Bedienblende 22 und Leiterplatte 26).

In einem Schritt 112 wird die elektrische Schaltungsanordnung 24 programmiert. Insbesondere erfolgt eine Programmierung der darin enthaltenen Auswerteelektronik 54, so dass bestimmte Bereiche vor der Bedienblende 22 als Betätigungsabschnitte 38 definiert werden. Ferner erfolgt eine Programmierung in Abhängigkeit von der Bestückung mit LEDs, sofern diese Anzeigeabschnitte 36 bilden. Auch erfolgt eine Programmierung des Monitors 70; 84, falls ein solcher vorgesehen ist.

Im Schritt 114 erfolgt anschließend noch eine Bedruckung, und zwar insbesondere dann, wenn die Anzeigeabschnitte nicht bereits vollständig durch den Monitor 70; 84 und/oder LEDs realisierbar sind. Im Allgemeinen erfolgt eine Bedruckung im Schritt 114 jedoch auch aus ästhetischen Gründen. Ferner ist eine Individualisierung möglich, und zwar nach Kundenwunsch, beispielsweise in Abhängigkeit von einer Online-Bestellung.

Anschließend wird die so vorgefertigte Bedienblendenanordnung an dem Basisgerät der Applikation montiert, um unterschiedliche Varianten zu bilden.

Man erkennt, dass unterschiedliche Varianten "A", "B" bis "n" realisierbar sind. Dabei können diese Varianten unmittelbar aufeinanderfolgend in einer Herstellungslinie (Montageband) hergestellt werden.

Obgleich ein Ausführungsbeispiel einer erfindungsgemäßen Bedienblendenanordnung und ein Ausführungsbeispiel eines erfindungsgemäßen Herstellungsverfahrens für eine Bedienblendenanordnung im Wesentlichen anhand einer Applikation in Form einer Haushaltsmaschine beschrieben worden sind, versteht sich, dass die Erfindung auch auf andere Applikationen anwendbar ist, wie sie bereits erwähnt wurden.

## Patentansprüche

1. Bedienblendenanordnung (20), insbesondere für Haushaltsmaschinen (10) wie Waschmaschinen und Wäschetrockner, mit einer Bedienblende (22), an deren Außenseite Betätigungsabschnitte (38) und Anzeigeabschnitte (36) zur Bedienung bzw. Kontrolle ausgebildet sind, und mit einer elektrischen Schaltungsanordnung (24), die mit den Betätigungsabschnitten (38) und den Anzeigeabschnitten (36) gekoppelt und im Bereich der Innenseite der Bedienblende (22) angeordnet ist,
**dadurch gekennzeichnet, dass**
die Schaltungsanordnung (24) wenigstens drei Elektroden (50), die etwa parallel zur Bedienblende (22) verteilt angeordnet sind, und Auswertemittel (54) aufweist, die dazu eingerichtet sind, die räumliche Lage eines Bedienmittels (40) in Bezug auf die Lage der drei Elektroden (50) zu errechnen, und zwar durch Auswertung der Felder zwischen den Elektroden (50) und dem Bedienmittel (40), so dass die Betätigungsabschnitte (38) als Positionen des Bedienmittels (40) im Bereich der Außenseite der Bedienblende (22) frei definierbar sind,
die Elektroden (50) jeweils über eine Oszillatoreinheit (56) mit einem Vergleicher (58) verbunden sind, und
der Vergleicher (58) für die Auswertung der Felder dafür ausgebildet ist auszuwerten, inwieweit eine Frequenzverschiebung im Bereich der Oszillatoreinheit (56) stattgefunden hat.

2. Bedienblendenanordnung (20) nach Anspruch 1, **dadurch gekennzeichnet, dass** die Elektroden (50) im Bereich von Ecken eines Bedienfeldes (34) der Bedienblende (22) angeordnet sind, innerhalb dessen die Betätigungsabschnitte (38) angeordnet sind.

3. Bedienblendenanordnung (20) nach einem der Ansprüche 1 - 2, **dadurch gekennzeichnet, dass** wenigstens ein Betätigungsabschnitt (38) an der Außenseite der Bedienblende (22) durch eine dargestellt ist.

4. Bedienblendenanordnung (20) nach einem der Ansprüche 1 - 3, **dadurch gekennzeichnet, dass** wenigstens ein Betätigungsabschnitt (38) an der Außenseite der Bedienblende (22) durch eine Anzeige auf einem Monitor (70; 84) dargestellt ist.

5. Bedienblendenanordnung (20) nach einem der Ansprüche 1 - 4, **dadurch gekennzeichnet, dass** wenigstens ein Anzeigeabschnitt (36) eine LED (42) aufweist, die an einer Leiterplatte (26) im Bereich der Innenseite der Bedienblende (22) angeordnet ist.

6. Bedienblendenanordnung (20) nach Anspruch 5, **dadurch gekennzeichnet, dass** die Leiterplatte (26; 26^{IV}) aus einem flexiblen Material hergestellt und zumindest im Bereich eines Anzeigefeldes (32), in dem die Anzeigeabschnitte (36) angeordnet sind, etwa parallel zu der Bedienblende (22) angeordnet ist.

7. Bedienblendenanordnung (20) nach Anspruch 5 oder 6, **dadurch gekennzeichnet, dass** die Bedienblende (22) im Bereich von zumindest einem Anzeigeabschnitt (36) eine Durchbrechung (46) aufweist, durch die hindurch Licht der LED (42) leuchtet.

8. Bedienblendenanordnung (20) nach einem der Ansprüche 5 - 7, **dadurch gekennzeichnet, dass** die Bedienblende (22) im Bereich von zumindest einem Anzeigeabschnitt (36) einen Wandabschnitt (48) dünnerer Wandstärke aufweist, durch den hindurch Licht der LED (42) leuchtet.

9. Bedienblendenanordnung (20) nach einem der Ansprüche 5 - 8, **dadurch gekennzeichnet, dass** ein Anzeigefeld ein Rasterfeld mit einer Mehrzahl von festen Positionen (78) aufweist, von denen zumindest einige mit LEDs (42) bestückt sind.

10. Bedienblendenanordnung (20) nach einem der Ansprüche 5 - 9, **dadurch gekennzeichnet, dass** die LEDs (42) jeweils über Lichtleiter (44; 76) mit der Bedienblende (22) gekoppelt sind.

11. Bedienblendenanordnung (20) nach Anspruch 10, **dadurch gekennzeichnet, dass** wenigstens ein Lichtleiter (76) gekröpft ausgebildet ist und mit einer LED (42) verbunden ist, derart, dass die LED (42) je nach Drehposition des Lichtleiters (76) unterschiedliche Anzeigeabschnitte (80) beleuchten kann.

12. Bedienblendenanordnung (20) nach einem der Ansprüche 1-11, **dadurch gekennzeichnet, dass** die Schaltungsanordnung (24) einen Näherungssensor (50, 54) aufweist, der das Annähern des Bedienmittels (40) erkennt und bestimmte Schaltungsabschnitte bei sich annäherndem Bedienmittel (40) aktiviert.

13. Bedienblendenanordnung (20) nach einem der Ansprüche 1 bis 12, **dadurch gekennzeichnet, dass** an der Bedienblende (22) eine Datenschnittstelle (72) vorgesehen ist, über die eine Neu- oder Umprogrammierung der elektrischen Schaltungsanordnung (24) erfolgen kann.

14. Verfahren (100) zum Herstellen einer Bedienblendenanordnung (20) gemäß einem der Ansprüche 1 bis 13, mit den Schritten:
a) formgebendes Fertigen (102) einer Bedienblende (22);
b) Zusammenbau (106, 100) der Bedienblende (22) und einer Schaltungsanordnung (24);
c) Programmieren (112) der Schaltungsanordnung (24) in Abhängigkeit von der Variante, für die die Bedienblendenanordnung (20) hergestellt wird; und
d) Bedrucken (114) der Bedienblende (22) in Abhängigkeit von der Variante, für die die Bedienblendenanordnung (20) hergestellt wird, wobei
der Schritt c) und/oder der Schritt d) nach dem Schritt b) erfolgt.

## Claims

1. Operating panel arrangement (20), in particular for domestic appliances (10) such as washing machines and tumble dryers, comprising an operating panel (22) which has formed on its outside actuating sections (38) and display sections (36) for operating or monitoring purposes, and comprising an electrical circuit arrangement (24) which is coupled to the actuating sections (38) and the display sections (36) and is arranged in the region on the inside of the operating panel (22),
**characterized in that**
the circuit arrangement (24) has at least three electrodes (50), which are arranged in a manner distributed approximately parallel to the operating panel (22), and evaluation means (54) which are adapted to calculate the spatial position of an operating means (40) in relation to the position of the three electrodes (50) by evaluating the fields between the electrodes (50) and the operating means (40), so that the actuating sections (38) can be freely defined as positions of the operating means (40) in the region on the outside of the operating panel (22),
the electrodes (50) are each connected via an oscillation unit (56) with a comparator (58), and
the comparator (58) is adapted in such a way for evaluating the fields to evaluate to which extent a frequency shift in the region of the oscillation unit (56) has occurred.

2. Operating panel arrangement (20) as claimed in claim 1, **characterized in that** the electrodes (50) are arranged in the region of corners of an operating field (34) of the operating panel (22) within which the actuating sections (38) are arranged.

3. Operating panel arrangement (20) as claimed in one of claims 1 or 2, **characterized in that** at least one actuating section (38) is provided on the outside of the operating panel (22) by being printed on.

4. Operating panel arrangement (20) as claimed in one of claims 1-3, **characterized in that** at least one actuating section (38) is shown on the outside of the operating panel by a display on a monitor (70; 84).

5. Operating panel arrangement (20) as claimed in one of claims 1-4, **characterized in that** at least one display section (36) has an LED which is arranged on a printed circuit (26) in the region on the inside of the operating panel (22).

6. Operating panel arrangement (20) as claimed in claim 5, **characterized in that** the printed circuit (26; 26^{IV}) is manufactured from a flexible material and is arranged approximately parallel to the operating panel (22) at least in the region of a display field (32) in which the display sections (36) are arranged.

7. Operating panel arrangement (20) as claimed in claim 5 or 6, **characterized in that** the operating panel (22) has an aperture (46), through which light from the LED (42) shines, in the region of at least one display section (36).

8. Operating panel arrangement (20) as claimed in one of claims 5-7, **characterized in that** the operating panel (22) has a wall section (48), which is of relatively low wall thickness and through which light from the LED (42) shines, in the region of at least one display section (36).

9. Operating panel arrangement as claimed in one of claims 5-8, **characterized in that** a display field has a grid coordinate system with a plurality of fixed positions (78), of which at least some are fitted with LEDs (42).

10. Operating panel arrangement (20) as claimed in one of claims 5-9, **characterized in that** the LEDs (42) are each coupled to the operating panel (22) via light guides (44; 76).

11. Operating panel arrangement (20) as claimed in claim 10, **characterized in that** at least one light guide (76) is angled and is connected to an LED (42) in such a way that the LED (42) can illuminate different display sections (80) depending on the rotational position of the light guide (76).

12. Operating panel arrangement (20) as claimed in one of claims 1-11, **characterized in that** the circuit arrangement (24) comprises a proximity sensor (50, 54) which identifies the approach of the operating means (40) and activates specific circuit sections as the operating means approaches.

13. Operating panel arrangement (20) as claimed in one of claims 1 to 12, **characterized in that** a data interface (72) by means of which the electrical circuit arrangement (24) can be initially programmed or reprogrammed is provided on the operating panel.

14. Method (100) for manufacturing an operating panel arrangement (20) according to any of claims 1 to 13, comprising the steps of:
a) shaping (102) an operating panel (22);
b) assembling (106, 100) the operating panel (22) and a circuit arrangement (24);
c) programming (112) the circuit arrangement (24) as a function of the variant for which the operating panel arrangement (20) is manufactured; and
d) printing (114) the operating panel (22) as a function of the variant for which the operating panel arrangement (20) is manufactured, wherein
step c) and/or step d) taking place after step b).

## Revendications

1. Ensemble (20) de panneau de commande, notamment pour machines domestiques (10) telles que les lave-linge et les sèche-linge, et présentant
un panneau de commande (22) sur le côté extérieur duquel sont formées des parties d'actionnement (38) et des parties d'affichage (36) permettant l'actionnement et le contrôle et
un circuit électrique (24) raccordé aux parties d'actionnement (38) et aux parties d'affichage (36) et disposé au niveau du côté intérieur du panneau de commande (22), **caractérisé en ce que**
le circuit (24) présente au moins trois électrodes (50) réparties sensiblement en parallèle au panneau de commande (22) et des moyens d'évaluation (54) conçus pour calculer la position spatiale d'un moyen d'actionnement (40) par rapport à la position des trois électrodes (50) par évaluation des champs agissant entre les électrodes (50) et le moyen de commande (40), de telle sorte que les parties d'actionnement (38) puissent être définies librement comme positions du moyen d'actionnement (40) au niveau du côté extérieur du panneau de commande (22),
**en ce que** chacune des électrodes (50) est raccordée à un comparateur (58) par l'intermédiaire d'une unité d'oscillateur (56) et
**en ce que** le comparateur (58) est configuré pour évaluer les champs en déterminant l'amplitude d'un décalage de fréquence de l'unité d'oscillateur (56).

2. Ensemble (20) de panneau de commande selon la revendication 1, **caractérisé en ce que** les électrodes (50) sont disposées au niveau des coins d'un champ de commande (34) du panneau de commande (22) à l'intérieur duquel les parties d'actionnement (38) sont disposées.

3. Ensemble (20) de panneau de commande selon l'une des revendications 1 et 2, **caractérisé en ce qu'**au moins une partie d'actionnement (38) est représentée par une inscription sur le côté extérieur du panneau de commande (22).

4. Ensemble (20) de panneau de commande selon l'une des revendications 1 à 3, **caractérisé en ce qu'**au moins une partie d'actionnement (38) est représentée sur le côté extérieur du panneau de commande (22) par un affichage sur un moniteur (70; 84).

5. Ensemble (20) de panneau de commande selon l'une des revendications 1 à 4, **caractérisé en ce qu'**au moins une partie d'affichage (36) présente une LED (42) disposée sur une carte de circuit (26) au niveau du côté intérieur du panneau de commande (22).

6. Ensemble (20) de panneau de commande selon la revendication 5, **caractérisé en ce que** la carte de circuit (26; 26^{IV}) est réalisée en un matériau flexible et est disposée au moins au niveau d'un champ d'affichage (32) dans lequel les parties d'affichage (36) sont disposées et sensiblement en parallèle au panneau de commande (22).

7. Ensemble (20) de panneau de commande selon les revendications 5 ou 6, **caractérisé en ce que** le panneau de commande (22) présente au niveau d'au moins une partie d'affichage (36) une perforation (46) par laquelle la lumière émise par la LED (42) est visible.

8. Ensemble (20) de panneau de commande selon l'une des revendications 5 à 7, **caractérisé en ce que** le panneau de commande (22) présente au niveau d'au moins une partie d'affichage (36) une partie de paroi (48) d'épaisseur plus mince à travers laquelle la lumière de la LED (42) est visible.

9. Ensemble (20) de panneau de commande selon l'une des revendications 5 à 8, **caractérisé en ce qu'**un champ d'affichage présente une grille présentant plusieurs positions fixes (78) dont au moins certaines sont équipées de LED (42).

10. Ensemble (20) de panneau de commande selon l'une des revendications 5 à 9, **caractérisé en ce que** les LED (42) sont toutes raccordées au panneau de commande (22) par l'intermédiaire de conducteurs de lumière (44; 76).

11. Ensemble (20) de panneau de commande selon l'une des revendications 10, **caractérisé en ce qu'**au moins un conducteur de lumière (76) est coudé et est raccordé à une LED (42) de telle manière que la LED (42) puisse éclairer différentes parties d'affichage (80) selon la position en rotation du conducteur de lumière (76).

12. Ensemble (20) de panneau de commande selon l'une des revendications 1 à 11, **caractérisé en ce que** le circuit (24) présente un capteur d'approche (50, 54) qui détecte l'approche du moyen de commande (40) et qui active certaines parties du circuit lorsque le moyen de commande (40) s'approche.

13. Ensemble (20) de panneau de commande selon l'une des revendications 1 à 12, **caractérisé en ce qu'**une interface de données (72) par laquelle une nouvelle programmation ou une reprogrammation du circuit électrique (24) peuvent s'effectuer est prévue sur le panneau de commande (22).

14. Procédé (100) de fabrication d'un ensemble de panneau de commande (20) selon l'une des revendications 1 à 13, le procédé présentant les étapes qui consistent à :
a) façonner (102) un panneau de commande (22),
b) assembler (106, 100) le panneau de commande (22) et un circuit (24),
c) programmer (112) le circuit (24) en fonction de la variante pour laquelle l'ensemble (20) de panneau de commande a été fabriqué et
d) imprimer (114) le panneau de commande (22) en fonction de la variante pour laquelle l'ensemble de panneau de commande (20) a été fabriqué,
l'étape c) et/ou l'étape d) ayant lieu après l'étape b).
